# FASCICULE DE BREVET EUROPEEN

(11) **EP 3 490 777 B1**
(45) Date de publication et mention de la délivrance du brevet: **22.04.2020**
(21) Numéro de dépôt: 17754419.4
(22) Date de dépôt: 27.07.2017
(51) Int. Cl.: B29C 45/28, B29C 45/82

(54) **SYSTÈME DE COMMANDE D'UN OBTURATEUR D'UN SYSTÈME D'INJECTION DE MATIÈRE PLASTIQUE**
SYSTEM ZUR STEUERUNG EINER BLENDE EINES KUNSTSTOFFEINSPRITZSYSTEMS
SYSTEM FOR CONTROLLING A SHUTTER OF A PLASTICS INJECTION SYSTEM

(30) Priorité: 28.07.2016 FR 1657287
(43) Date de publication de la demande: 05.06.2019
(73) Titulaire: Runipsys Europe, 73420 Mery (FR)
(72) Inventeur: DERICHE, Eric, 73420 Mery (FR)
(74) Mandataire: Regimbeau
(86) Numéro de dépôt international: PCT/FR2017/052120
(87) Numéro de publication internationale: WO 2018/020177

(56) Documents cités:
- WO-A2-2014/031826
- JP-A- H 091 600
- JP-A- H0 664 002

## Description

### DOMAINE DE L'INVENTION

La présente invention concerne un système de commande d'un obturateur agencé en coulissement dans une buse d'injection de matière plastique.

### ARRIERE PLAN DE L'INVENTION

Un système d'injection de type « bloc chaud » ou « à canaux chauds » (« hot runner » selon la terminologie anglo-saxonne) comporte habituellement :
- un distributeur délimitant un canal de distribution de matière plastique et comportant une sortie de matière thermoplastique, ledit distributeur comprenant des moyens permettant de maintenir sa température, et par conséquent celle de la matière transitant dans le canal de distribution, à une température supérieure à la température limite de passage à l'état fluide de la matière.
- une buse d'injection définissant au moins une portion d'un passage de transit dont l'entrée est en liaison fluidique avec la sortie du canal de distribution, et dont la sortie débouche sensiblement dans l'empreinte de moulage,
- un obturateur monté à coulissement longitudinal à l'intérieur du passage de transit et occupant de manière alternée une position d'obturation et une position d'ouverture de celui-ci,
- des moyens de commande pour faire coulisser alternativement l'obturateur entre la position d'obturation et la position d'ouverture.

Le contrôle de l'ouverture et de la fermeture de l'obturateur revêt une importance particulière pour la qualité des pièces formées dans l'empreinte de moulage, notamment dans le cas d'une injection séquentielle, c'est-à-dire lorsque l'empreinte de moulage est alimentée par plusieurs buses d'injection dont l'ouverture et la fermeture sont décalées temporellement.

En particulier, il est souhaitable de pouvoir faire varier au cours du temps la vitesse de coulissement de l'obturateur.

Suivant la technologie employée pour commander l'obturateur (pneumatique, hydraulique ou électrique), différentes solutions ont déjà été mises en œuvre pour faire varier la vitesse de coulissement de l'obturateur.

Ainsi, le document EP 2 679 374 décrit un système de commande d'un obturateur comprenant un moteur électrique couplé audit obturateur par un mécanisme de transmission adapté pour transformer un mouvement de rotation du moteur en un mouvement de coulissement de l'obturateur. Le pilotage du moteur permet de contrôler la vitesse de coulissement de l'obturateur.

Le document EP 2 604 408 décrit quant à lui un système de commande d'un obturateur comprenant un vérin hydraulique couplé audit obturateur pour l'entraîner en coulissement et un circuit hydraulique de contrôle du vérin comprenant une électrovanne bidirectionnelle permettant d'injecter ou de retirer un fluide du vérin pour actionner l'obturateur dans un sens ou dans l'autre. Le circuit hydraulique comprend en outre, en série avec l'électrovanne bidirectionnelle, un régulateur de débit à commande proportionnelle piloté par une unité de contrôle. En fonction du signal transmis par l'unité de contrôle, le régulateur autorise un débit de fluide plus ou moins grand. Par conséquent, en ajustant le débit du régulateur, il est possible de faire varier au cours du temps la vitesse de coulissement de l'obturateur dans la buse.

Cependant, les systèmes de commande mentionnés ci-dessus sont relativement onéreux et complexes.

Le document WO 2014/031826 décrit un système de commande d'un obturateur mettant en œuvre un vérin hydraulique. Ledit système comprend un régulateur unidirectionnel de débit et une électrovanne de dérivation dudit régulateur de débit. Un tel système n'autorise que deux vitesses du vérin : une vitesse régulée (par l'intermédiaire du régulateur de débit) et une vitesse maximale, non régulée (par l'intermédiaire de l'électrovanne).

Cependant, ces deux vitesses ne procurent qu'un nombre limité de possibilités d'ajustement de la vitesse de déplacement de l'obturateur, insuffisant pour remédier aux problèmes d'aspect rencontrés sur les pièces plastiques injectées, notamment de grandes dimensions ou ayant des contraintes esthétiques importantes.

### BREVE DESCRIPTION DE L'INVENTION

Un but de l'invention est de concevoir un système de commande d'un obturateur permettant de moduler la vitesse de l'obturateur - voire de bloquer sa course - qui soit plus simple et moins onéreux que les systèmes existants et ce, quel que soit le type de vérin (hydraulique ou pneumatique) employé pour actionner l'obturateur.

Conformément à l'invention, il est proposé un système de commande d'un obturateur agencé en coulissement dans une buse d'injection de matière plastique selon la revendication 1.

Selon un mode de réalisation, ledit système comprend en outre au moins un redresseur de débit couplé à au moins un régulateur unidirectionnel de débit.

Par ailleurs, le système comprend en outre un clapet anti-retour agencé en parallèle d'au moins un régulateur unidirectionnel de débit.

De manière particulièrement avantageuse, le système comprend en outre une électrovanne agencée de sorte à sélectivement établir une liaison fluidique entre la première chambre du vérin et le premier ou le second régulateur unidirectionnel de débit lors d'une phase d'ouverture de l'obturateur.

De préférence, le débit du premier et/ou le second régulateur est ajustable dans une gamme de débit déterminée.

De manière particulièrement avantageuse, le vérin ou l'obturateur est pourvu d'un capteur de position et l'unité de commande séquentielle est configurée pour contrôler l'émission des signaux de commande en fonction des mesures fournies par ledit capteur de position.

Eventuellement, l'unité de commande séquentielle est configurée pour prendre en outre en compte au moins l'une des données suivantes : un temps du procédé d'injection, une position d'un capteur, une pression ou une température dans l'outillage d'injection, un signal de la presse à injecter.

Selon un mode de réalisation, l'unité de commande séquentielle est configurée pour envoyer un signal électrique de commande sous la forme d'un courant continu.

De manière alternative, l'unité de commande séquentielle est configurée pour envoyer un signal électrique de commande sous la forme d'un courant alternatif.

### BREVE DESCRIPTION DES DESSINS

D'autres caractéristiques et avantages de l'invention ressortiront de la description détaillée qui va suivre, en référence aux dessins annexés sur lesquels :
- les figures 1A et 1B sont des schémas blocs d'un système de commande de l'obturateur selon des modes de réalisation de l'invention,
- la figure 2 est un schéma hydraulique d'un système de commande de l'obturateur selon un mode de réalisation de l'invention,
- la figure 3 est un schéma hydraulique d'un système de commande de l'obturateur selon un autre mode de réalisation de l'invention,
- la figure 4 est une courbe de la course de l'obturateur en fonction du temps au cours de deux cycles d'ouverture-fermeture de l'obturateur susceptible d'être obtenue avec les modes de réalisation des figures 2 et 3,
- la figure 5 est un schéma hydraulique d'un système de commande de l'obturateur selon un autre mode de réalisation de l'invention,
- la figure 6 est un schéma hydraulique d'un système de commande de l'obturateur selon un autre mode de réalisation de l'invention,
- les figures 7A et 7B sont des courbes de la course de l'obturateur en fonction du temps au cours de deux cycles d'ouverture-fermeture de l'obturateur susceptibles d'être obtenues avec les modes de réalisation des figures 5 et 6.

### DESCRIPTION DETAILLEE DE MODES DE REALISATION DE L'INVENTION

De manière connue en elle-même, le système d'injection comprend un obturateur agencé en coulissement dans une buse d'injection de matière plastique.

D'une manière générale, le système de commande de l'obturateur comprend un vérin dont la tige est couplée audit obturateur pour l'entraîner en coulissement entre une position d'obturation de la buse et une position d'ouverture maximale de la buse.

Selon un mode de réalisation, le vérin est un vérin hydraulique. De manière alternative, le vérin est un vérin pneumatique. Selon une troisième forme d'exécution non couvert par les revendications, le vérin est électrique.

Dans tous les cas, le système de commande de l'obturateur comprend un dispositif de commande du vérin qui inclut au moins deux éléments parmi les trois éléments suivants :
- un élément de régulation de la vitesse du vérin réglé à une première vitesse constante,
- un élément de régulation de la vitesse du vérin réglé à une seconde vitesse constante, supérieure à la première vitesse,
- un élément de blocage de la course d'ouverture du vérin.

Selon le type de vérin, la vitesse du vérin (et par conséquent de l'obturateur) est ajustée par un débit de fluide entrant ou sortant du vérin (cas d'un vérin hydraulique ou pneumatique) ou par un signal électrique émis par un composant d'une carte électronique de commande vers un moteur du vérin (cas d'un vérin électrique). De même, le blocage de la course du vérin peut être obtenu par un blocage de la circulation de fluide en entrée ou en sortie du vérin (cas d'un vérin hydraulique ou pneumatique), ou par un signal électrique spécifique émis par un composant d'une carte électronique de commande vers un moteur du vérin (cas d'un vérin électrique).

De manière avantageuse, l'ensemble de ces trois éléments offre la plus grande diversité de combinaisons de vitesses / blocages de course. Toutefois, en pratique, l'utilisation d'uniquement deux de ces trois éléments est suffisante pour procurer un ajustement fin de la course de l'obturateur, capable d'améliorer sensiblement la qualité des pièces injectées.

Quelle que soit la technologie retenue, lesdits éléments sont commandés électriquement par une unité de commande séquentielle. Une telle unité de commande, également connue sous le terme de séquenceur, est disponible sur le marché selon différents modèles et ne nécessite pas d'adaptation particulière pour pouvoir être utilisée dans la présente invention.

L'unité de commande séquentielle comprend au moins deux voies de commande, chacune reliée électriquement à l'un des éléments susmentionnés.

L'unité de commande séquentielle est configurée pour envoyer sélectivement un signal électrique de commande par l'une et/ou l'autre desdites voies de commande aux éléments du dispositif de commande du vérin de telle sorte que :
- sous l'effet d'un premier signal envoyé par la première voie, le vérin est mû à une première vitesse,
- sous l'effet d'un second signal envoyé par la seconde voie, le vérin est mû à une seconde vitesse différente de la première ou sa course est bloquée.

Chaque signal de commande peut être transmis sous la forme d'un courant électrique continu ou d'un courant alternatif.

De manière particulièrement avantageuse, le vérin ou l'obturateur est pourvu d'un capteur de position couplé à l'unité de commande séquentielle et l'unité de commande séquentielle contrôle l'émission des signaux de commande en fonction des mesures fournies par ledit capteur de position. L'utilisation d'un tel capteur est connue en elle-même et ne nécessite pas d'être décrite plus en détail dans le présent texte. Le fait de générer les signaux de commandes à partir des données de mesure d'un tel capteur de position permet un contrôle plus précis de la séquence d'ouverture-fermeture qu'à partir d'un séquençage purement temporel.

Par ailleurs, l'unité de commande séquentielle peut prendre en compte l'une au moins des données suivantes - combinée(s) aux données du capteur de position susmentionné - pour l'émission des signaux de commande : un temps, la position d'un capteur (par exemple : la position de la vis d'extrusion), une pression ou une température dans l'outillage (moule d'injection ou bloc chaud), un signal de la presse à injecter (par exemple : top injection, top maintien), etc. Ces données sont couramment enregistrées lors de la mise en œuvre du procédé d'injection thermoplastique, et la presse à injecter et l'outillage d'injection sont équipés de capteurs appropriés, couplés à un coffret d'acquisition. L'exploitation de ces données ne nécessite donc pas de moyens d'acquisition développés spécifiquement pour l'invention. L'homme du métier est en mesure de traiter un ou plusieurs desdits signaux et d'en déduire une programmation de chaque séquence d'ouverture-fermeture de l'obturateur.

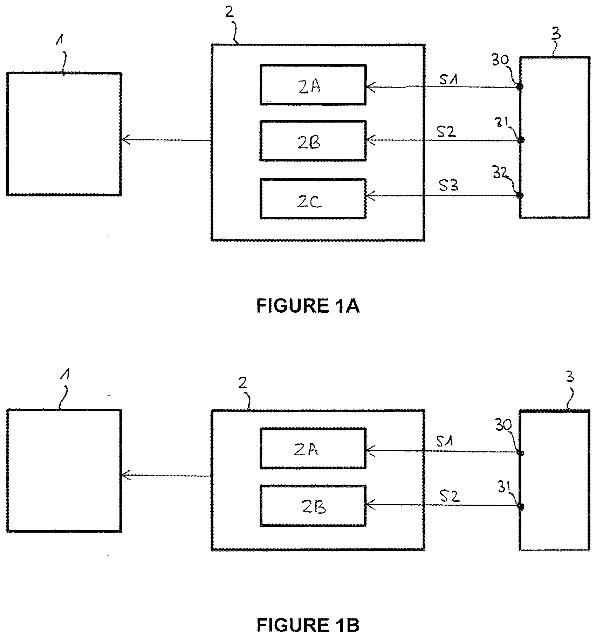

La figure 1A est un schéma bloc du système de commande de l'obturateur selon un mode de réalisation.

Le vérin est désigné par le repère 1. L'obturateur n'est pas représenté sur cette figure.

Le dispositif 2 de commande du vérin comprend trois éléments 2A, 2B, 2C dont l'un est un élément de régulation de la vitesse du vérin réglé à une première vitesse constante (dite vitesse lente), un autre est un élément de régulation de la vitesse du vérin réglé à une seconde vitesse constante (dite vitesse rapide), supérieure à la première vitesse, et un autre encore est un élément de blocage de la course d'ouverture du vérin. Comme on le verra plus bas, il peut exister des interactions entre les éléments 2A, 2B et 2C (notamment des liaisons fluidiques, dans le cas du dispositif d'alimentation d'un vérin hydraulique ou pneumatique). Toutefois, celles-ci ne sont pas représentées sur la figure 1.

L'unité de commande séquentielle est désignée par le repère 3. Elle comprend trois voies de sortie 30, 31, 32, chacune reliée à un élément respectif 2A, 2B, 2C du dispositif de commande du vérin, permettant de lui envoyer un signal de commande respectif S1, S2, S3.

La figure 1B est un schéma bloc du système de commande de l'obturateur dans un mode de réalisation simplifié dans lequel le dispositif 2 comprend uniquement deux éléments 2A, 2B. Dans ce cas, on utilise uniquement deux voies 30, 31 de l'unité de commande séquentielle 3.

On s'intéresse maintenant plus précisément au cas d'un vérin hydraulique ou pneumatique.

Le vérin est un vérin à double effet et comprend donc un cylindre définissant deux chambres isolées l'une de l'autre par un piston apte à coulisser dans ledit cylindre et solidaire de la tige. Chacune des deux chambres comprend un orifice d'entrée/sortie de fluide. Par convention, on considère que la course d'ouverture maximale de l'obturateur est atteinte lorsque le volume de fluide dans la seconde chambre est maximal et le volume de fluide dans la première chambre est minimal. Inversement, l'obturateur est en position fermée lorsque le volume de fluide dans la première chambre est maximal et le volume de fluide dans la seconde chambre est minimal.

Le dispositif de commande du vérin comprend un dispositif de distribution de fluide au vérin (le fluide étant un liquide dans le cas d'un vérin hydraulique, un gaz dans le cas d'un vérin pneumatique).

Ce dispositif de distribution comprend :
- une première voie en liaison fluidique avec une première chambre du vérin,
- une deuxième voie en liaison fluidique avec une seconde chambre du vérin,
- une troisième voie d'alimentation en fluide à partir d'un réservoir.

Dans le cas d'un vérin hydraulique, le dispositif de distribution comprend en outre une quatrième voie de retour du fluide vers le réservoir. Dans le cas d'un vérin pneumatique, une telle quatrième voie n'est pas nécessaire, le fluide en sortie du vérin étant remis à l'atmosphère.

Par ailleurs, le dispositif de distribution comprend un ou deux régulateurs unidirectionnels du débit de fluide et deux ou trois électrovannes agencées de sorte à sélectivement établir au moins deux configurations différentes du circuit de fluide au sein du dispositif de distribution, au cours d'une phase d'ouverture et éventuellement de fermeture de l'obturateur.

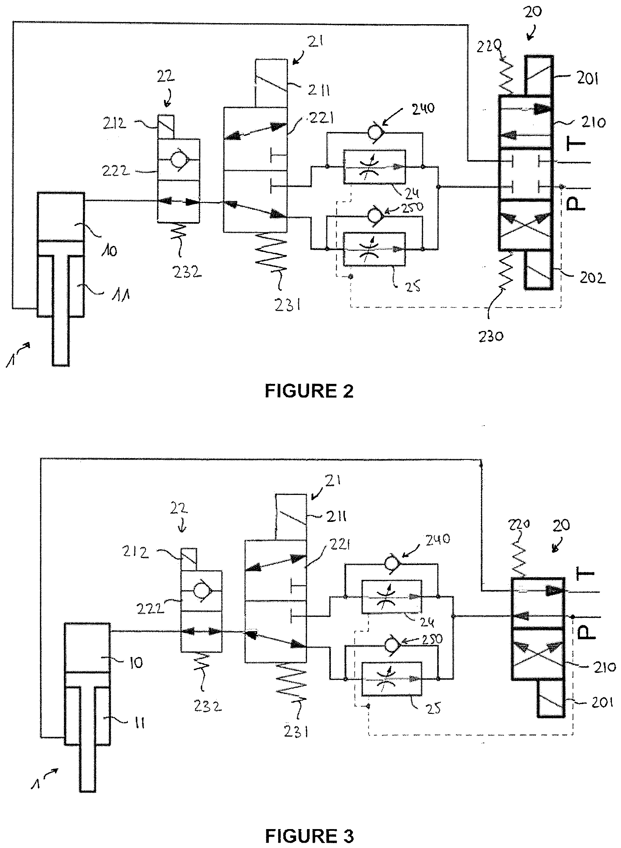

Différents modes de réalisation de ces électrovannes et de leur agencement dans le circuit de fluide seront décrits en détail en référence aux figures 2, 3, 5 et 6.

Un premier régulateur unidirectionnel du débit de fluide est agencé dans la liaison fluidique entre la première voie et la première chambre du vérin. Ledit premier régulateur est réglé à un premier débit constant.

Un second régulateur unidirectionnel du débit de fluide est agencé dans la liaison fluidique, en série ou en parallèle avec le premier régulateur, entre la première voie et la première chambre du vérin. Ledit régulateur est réglé à un second débit constant supérieur au premier débit.

Bien que chacun des deux régulateurs unidirectionnels de débit impose un débit constant respectif au cours d'un cycle de fonctionnement du système de commande de l'obturateur, il va de soi que le débit de chacun de ces obturateurs peut être ajustable, par exemple au moyen d'une molette, dans une plage de débit donnée. Ceci permet éventuellement, entre deux cycles d'injection de matière plastique, de modifier le débit imposé par l'un et/ou l'autre desdits régulateurs. De tels régulateurs unidirectionnels sont disponibles sur le marché selon différents modèles et ne nécessitent pas d'adaptation particulière pour pouvoir être utilisés dans la présente invention. Par définition, quel que soit le débit auxquels ils sont réglés, ces régulateurs unidirectionnels de débit imposent un débit inférieur au débit maximal de fluide dans le circuit. Ainsi, une électrovanne en position passante ne saurait être assimilée à un régulateur unidirectionnel de débit.

Par ailleurs, les électrovannes comprennent des organes électriques de commande (typiquement, des bobines électromagnétiques) adaptés pour déplacer au moins un organe mobile (typiquement, un tiroir comprenant une pluralité de canaux traversants ou bloquants) de sorte à sélectivement établir au moins deux configurations différentes du circuit de fluide au sein du dispositif de distribution.

Chacune des bobines est reliée électriquement à l'une des voies de l'unité de commande séquentielle.

Chaque électrovanne permet la sélection d'une modalité particulière du circuit de fluide.

Ainsi, une première électrovanne, dite électrovanne principale, permet de définir le sens de circulation du fluide au sein du dispositif de distribution. Ainsi, une position de ladite électrovanne permet de faire circuler le fluide du réservoir vers la première chambre du vérin et de la seconde chambre du vérin (phase de fermeture de l'obturateur), tandis qu'une autre position de l'électrovanne permet de faire circuler le fluide du réservoir vers la seconde chambre du vérin et de la première chambre du vérin vers le réservoir (phase d'ouverture de l'obturateur). L'électrovanne principale peut ainsi être monostable. Eventuellement, ladite électrovanne principale peut également présenter une position neutre, dans laquelle aucune liaison fluidique n'est établie entre les deux chambres du vérin et le réservoir. Dans ce cas, l'électrovanne principale est bistable.

Une deuxième électrovanne permet de sélectionner une vitesse d'ouverture lente ou rapide. A cet effet, ladite électrovanne est couplée sélectivement - selon la position de son tiroir - au premier ou au second régulateur unidirectionnel de débit sur le trajet du fluide entre la première chambre du vérin et le réservoir. Chaque régulateur unidirectionnel de débit est agencé en parallèle d'un clapet anti-retour permettant un passage de fluide en sens inverse du régulateur unidirectionnel de débit. En d'autres termes, le clapet anti-retour empêche le passage de fluide lors de l'ouverture - de sorte à forcer le passage de fluide au travers du régulateur unidirectionnel de débit sélectionné pendant la phase d'ouverture - et permet le passage de fluide pendant la phase de fermeture. Le passage du fluide au travers du clapet anti-retour n'étant pas limité en termes de débit, la fermeture est considérée comme instantanée. Comme on le verra dans un mode de réalisation particulier plus bas, l'un des régulateurs de débit peut être agencé en parallèle avec un redresseur de débit, afin de permettre le cas échéant d'imposer un débit déterminé de fluide pendant la phase de fermeture. Dans ce cas, au lieu d'être instantanée, la fermeture a lieu à la première ou à la seconde vitesse, selon l'emplacement du redresseur de débit.

Enfin, une troisième électrovanne permet de sélectivement bloquer la circulation de fluide entre la première chambre du vérin et le réservoir pendant la phase d'ouverture et, éventuellement, pendant la phase de fermeture.

Le tableau ci-dessous présente les différents modes de commande du vérin susceptibles d'être obtenus avec au moins deux électrovannes.

| Mode de réalisation | Electrovanne principale | Vitesse(s) d'ouverture | Blocage de l'ouverture | Vitesse de fermeture | Blocage de la fermeture |
|---|---|---|---|---|---|
| 1 | Bistable | 1 (rapide) | Oui | Instantanée | Non |
| 2 | | | | | Oui |
| 3 | | | | Rapide | Non |
| 4 | | | | | Oui |
| 5 | | | Non | Instantanée | Non |
| 6 | | | | | Oui |
| 7 | | | | Rapide | Non |
| 8 | | | | | Oui |
| 9 | | | Oui | Instantanée | Non |
| 10 | | | | | Oui |
| 11 | | | | Rapide | Non |
| 12 | | 1 rapide | | | Oui |
| 13 | | 1 lente | Non | Instantanée | Non |
| 14 | | | | | Oui |
| 15 | | | | Rapide | Non |
| 16 | | | | | Oui |
| 17 | | 1 (rapide) | Oui | Instantanée | Non |
| 18 | | | | | Oui |
| 19 | | | | Rapide | Non |
| 20 | | | | | Oui |
| 21 | | | Non | Instantanée | Non |
| 22 | | | | | Oui |
| 23 | | | | Rapide | Non |
| 24 | Monostable | | | | Oui |
| 25 | | | Oui | Instantanée | Non |
| 26 | | | | | Oui |
| 27 | | | | Rapide | Non |
| 28 | | 1 rapide | | | Oui |
| 29 | | 1 lente | Non | Instantanée | Non |
| 30 | | | | | Oui |
| 31 | | | | Rapide | Non |
| 32 | | | | | Oui |

Les figures 2, 3, 5 et 6 illustrent respectivement les schémas hydrauliques correspondant aux modes de réalisation n^{os} 9, 25, 12 et 28, étant entendu que l'homme du métier est en mesure, à partir de ces exemples, de définir un schéma hydraulique pour chacun des autres modes de réalisation.

Sur ces figures, le vérin est supposé hydraulique, mais l'homme du métier pourrait transposer l'enseignement de ces figures à un vérin pneumatique sans pour autant sortir du cadre de la présente invention.

La figure 2 est un schéma hydraulique du mode de réalisation n°9, basé sur une électrovanne principale bistable 20 et deux électrovannes monostables 21, 22.

L'électrovanne bistable 20 commande la phase d'ouverture ou de fermeture de l'obturateur. L'électrovanne monostable 22 commande un éventuel blocage de l'ouverture de l'obturateur, tandis que l'électrovanne monostable 21 commande une vitesse lente ou rapide d'ouverture de l'obturateur.

De manière connue en elle-même, chaque électrovanne monostable 21, 22 comprend une bobine électromagnétique 211 (respectivement 212), un tiroir 221 (respectivement 222) mobile entre une position de repos pour laquelle la bobine n'est pas alimentée électriquement et une position activée pour laquelle la bobine est alimentée électriquement, et un moyen de rappel 231 (respectivement 232) du tiroir vers sa position de repos. Par ailleurs, l'électrovanne bistable 20 comprend deux bobines électromagnétiques 201, 202, un tiroir 210 mobile entre une position de repos où aucune des bobines 201, 202 n'est alimentée électriquement, une première position activée où la bobine 201 est alimentée électriquement et une seconde position activée où la bobine 202 est alimentée électriquement, et deux moyens de rappels 220, 230 du tiroir.

Dans l'électrovanne 20, la position de repos (qui est celle illustrée sur la figure 2) bloque le passage de fluide en provenance du réservoir vers la première chambre 10 du vérin 1 et le passage de fluide en provenance de la seconde chambre 11 du vérin 1 vers le réservoir.

Sur la première voie, les deux électrovannes monostables 21, 22 sont agencées en série avec un montage en parallèle de deux régulateurs unidirectionnels de débit 24, 25 dont chacun est monté en parallèle avec un clapet anti-retour unidirectionnel 240, 250 respectif. On suppose que le premier régulateur de débit 24 impose une vitesse lente du vérin tandis que le second régulateur 25 impose une vitesse rapide du vérin.

Lorsque la bobine 202 de l'électrovanne 20 est alimentée électriquement, le tiroir est déplacé vers le haut (par rapport à la configuration illustrée à la figure 2), permettant ainsi le passage de fluide en provenance du réservoir vers la seconde chambre 11 du vérin et le passage de fluide en provenance de la première chambre 10 du vérin vers le réservoir (phase d'ouverture de l'obturateur).

Dans l'électrovanne 22, la position de repos (qui est celle illustrée sur la figure 2) permet le passage de fluide de la première chambre 10 du vérin vers l'électrovanne 21. La position du tiroir 222 lorsque la bobine 212 est alimentée électriquement (correspondant à un déplacement vers le bas dans la configuration illustrée sur la figure 2) bloque le passage de fluide de la première chambre du vérin vers l'électrovanne 21 et permet ainsi un blocage de la course d'ouverture de l'obturateur.

Dans l'électrovanne 21, la position de repos (qui est celle illustrée sur la figure 2) permet le passage de fluide au travers du second régulateur unidirectionnel de débit 25, imposant une vitesse d'ouverture rapide. Lorsque la bobine 211 de l'électrovanne 21 est alimentée électriquement, la position du tiroir 221 (correspondant à un déplacement vers le bas par rapport à la configuration illustrée à la figure 2) envoie le fluide vers le premier régulateur unidirectionnel de débit 24, imposant ainsi une vitesse d'ouverture lente de l'obturateur.

Lorsque la bobine 201 de l'électrovanne principale 20 est alimentée électriquement, la position du tiroir 210 (correspondant à un déplacement vers le bas par rapport à la configuration illustrée à la figure 2) permet le passage de fluide en provenance du réservoir vers la première chambre 10 du vérin et le passage de fluide en provenance de la seconde chambre 11 du vérin vers le réservoir (phase de fermeture de l'obturateur).

Dans l'électrovanne 22, la position de repos (qui est celle illustrée sur la figure 2) permet le passage de fluide de l'électrovanne 21 vers la première chambre 10 du vérin. De même, la position du tiroir 222 lorsque la bobine 212 est alimentée électriquement (correspondant à un déplacement vers le bas dans la configuration illustrée sur la figure 2) permet le passage de fluide de l'électrovanne 21 vers la première chambre du vérin. Dans cette configuration, il est donc inutile d'alimenter la bobine de l'électrovanne 21 pendant la phase de fermeture.

Dans la phase de fermeture, le passage de fluide au travers des régulateurs de débit n'est pas possible ; le passage de fluide a donc lieu au travers de l'un des clapets anti-retour, et la vitesse de fermeture est considérée comme instantanée, le débit n'étant pas limité au travers dudit clapet anti-retour.

Dans l'électrovanne 21, la position de repos (qui est celle illustrée sur la figure 2) permet le passage de fluide au travers du clapet anti-retour 250 agencé en parallèle du second régulateur unidirectionnel de débit 25. Lorsque la bobine 211 de l'électrovanne 21 est alimentée électriquement, la position du tiroir 221 (correspondant à un déplacement vers le bas par rapport à la configuration illustrée à la figure 2) permet le passage de fluide au travers du clapet anti-retour 240 agencé en parallèle du premier régulateur de débit 24. Dans cette configuration, il est donc inutile d'alimenter la bobine de l'électrovanne 21 pendant la phase de fermeture.

La figure 3 est un schéma hydraulique du mode de réalisation n°25, mettant en oeuvre trois électrovannes monostables 20, 21, 22.

Ce mode de réalisation est à rapprocher de celui du mode de réalisation n°9, la seule différence étant que l'électrovanne principale 20 qui commande l'ouverture ou la fermeture de l'obturateur est monostable et non bistable. On ne décrira donc pas à nouveau les autres éléments du circuit hydraulique.

Au repos (correspondant à la configuration illustrée sur la figure 3), le tiroir 210 de l'électrovanne 20 permet le passage de fluide du réservoir vers la première chambre 10 du vérin et de la seconde chambre 11 du vérin vers le réservoir (phase de fermeture de l'obturateur).

Comme dans le mode de réalisation n°9 illustré sur la figure 2, les électrovannes 21 et 22 peuvent être laissées au repos et permettent ainsi le passage du fluide au travers du clapet anti-retour 250 agencé en parallèle du second régulateur unidirectionnel de débit 25.

Lorsque la bobine 201 de l'électrovanne 20 est alimentée électriquement, le tiroir 210 se déplace (vers le haut par rapport à la configuration illustrée sur la figure 3), permettant ainsi le passage de fluide du réservoir vers la seconde chambre 11 du vérin et de la première chambre 10 du vérin vers le réservoir (phase d'ouverture de l'obturateur).

Dans l'électrovanne 22, la position de repos (qui est celle illustrée sur la figure 3) permet le passage de fluide de la première chambre 10 du vérin vers l'électrovanne 21. La position du tiroir lorsque la bobine 212 est alimentée électriquement (correspondant à un déplacement vers le bas dans la configuration illustrée sur la figure 3) bloque le passage de fluide de la première chambre 10 du vérin vers l'électrovanne 21 et permet ainsi un blocage de la course d'ouverture de l'obturateur.

Dans l'électrovanne 21, la position de repos (qui est celle illustrée sur la figure 3) permet le passage de fluide au travers du second régulateur unidirectionnel de débit 25, imposant une vitesse d'ouverture rapide. Lorsque la bobine 211 de l'électrovanne 21 est alimentée électriquement, la position du tiroir 221 (correspondant à un déplacement vers le bas par rapport à la configuration illustrée à la figure 3) envoie le fluide vers le premier régulateur unidirectionnel de débit 24, imposant ainsi une vitesse d'ouverture lente de l'obturateur.

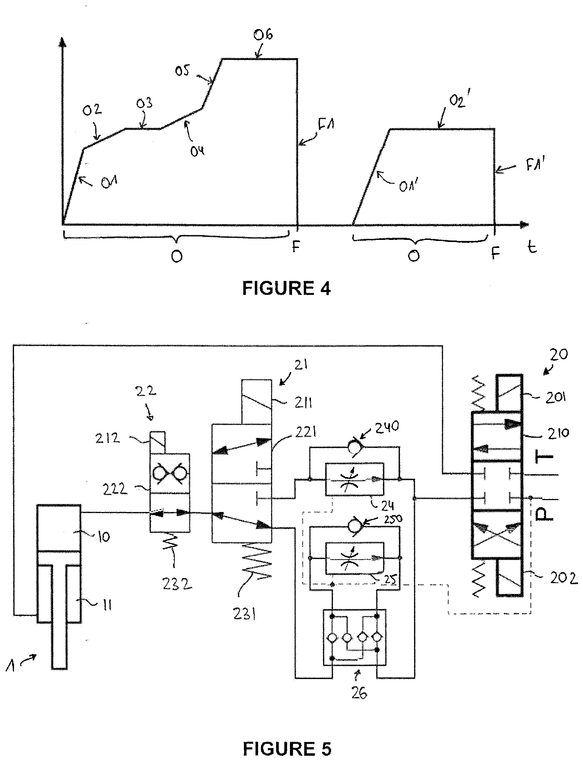

La figure 4 illustre un exemple de courbe de course de l'obturateur au cours du temps susceptible d'être obtenue avec les modes de réalisation n^{os} 9 et 25.

Une course nulle correspond à une fermeture totale de l'obturateur.

Une première étape O1 de la phase d'ouverture O est réalisée à vitesse rapide, l'électrovanne 21 étant au repos pour procurer une liaison fluidique entre la première chambre 10 du vérin et le second régulateur unidirectionnel de débit 25.

Une deuxième étape O2 de la phase d'ouverture O est réalisée à vitesse lente, l'électrovanne 21 étant actionnée pour procurer une liaison fluidique entre la première chambre 10 du vérin et le premier régulateur unidirectionnel de débit 24.

Une troisième étape O3 de la phase d'ouverture O est réalisée avec l'obturateur bloqué, l'électrovanne 22 étant actionnée pour bloquer la circulation de fluide entre la première chambre 10 du vérin et l'électrovanne 21.

Une quatrième étape O4 de la phase d'ouverture O est réalisée à vitesse lente, l'électrovanne 22 étant désactivée et l'électrovanne 21 étant activée pour procurer une liaison fluidique entre la première chambre 10 du vérin et le premier régulateur unidirectionnel de débit 24.

Une cinquième étape O5 de la phase d'ouverture O est réalisée à vitesse rapide, l'électrovanne 21 étant au repos pour procurer une liaison fluidique entre la première chambre 10 du vérin et le second régulateur unidirectionnel de débit 25.

Dans une sixième étape O6 de la phase d'ouverture O, la course maximale d'ouverture de l'obturateur étant atteinte, celle-ci est bloquée.

L'étape de fermeture F1 est quant à elle instantanée, le fluide passant au travers de l'un des clapets anti-retour agencé en parallèle d'un régulateur unidirectionnel de débit.

Une deuxième séquence d'ouverture-fermeture comprend une première étape O1' à vitesse rapide, une deuxième étape O2' avec l'obturateur bloqué, et une étape de fermeture instantanée F1'.

Il va de soi que la courbe de la figure 4 n'est qu'un exemple non limitatif parmi la pluralité de séquences que les modes de réalisation n^{os} 9 et 25 permettent de générer.

Si l'on ne souhaite pas pouvoir bloquer la course d'ouverture de l'obturateur mais seulement influer sur la vitesse d'ouverture, on pourra retirer l'électrovanne 22 du circuit hydraulique représenté sur les figures 2 et 3.

De même, si l'on ne souhaite pas faire varier la vitesse d'ouverture mais avoir la possibilité de bloquer la course d'ouverture, on pourra retirer l'électrovanne 21 et l'un des régulateurs de débit dans le circuit hydraulique représenté sur les figures 2 et 3.

La figure 5 est un schéma hydraulique du mode de réalisation n°12, basé sur une électrovanne principale bistable 20 et deux électrovannes monostables 21, 22.

Par rapport au mode de réalisation n°9, le tiroir de l'électrovanne 22 présente un état passant au repos et un état bloquant dans les deux sens lorsque la bobine 212 est alimentée électriquement. Par ailleurs, un redresseur de débit 26 est agencé en parallèle du second régulateur unidirectionnel de débit 25. Ledit redresseur de débit 26 comprend une pluralité de clapets anti-retour unidirectionnels agencés de manière analogue à un pont de diodes utilisé pour redresser un courant électrique. Plus précisément, les clapets sont agencés de telle sorte que, lorsque l'électrovanne 21 est au repos, quel que soit le sens de circulation du fluide entre la première chambre 10 du vérin et le réservoir, le fluide passe toujours par le second régulateur unidirectionnel de débit 25. En d'autres termes, ce redresseur de débit 26 permet d'imposer une vitesse rapide de fermeture - au lieu d'une fermeture instantanée - en plus de la vitesse rapide d'ouverture procurée par le régulateur unidirectionnel de débit 25 seul.

Dans l'électrovanne principale 20, la position de repos (qui est celle illustrée sur la figure 5) bloque le passage de fluide en provenance du réservoir vers la première chambre 10 du vérin 1 et le passage de fluide en provenance de la seconde chambre 11 du vérin 1 vers le réservoir.

Lorsque la bobine 202 de l'électrovanne 20 est alimentée électriquement, le tiroir est déplacé vers le haut (par rapport à la configuration illustrée à la figure 5), permettant ainsi le passage de fluide en provenance du réservoir vers la seconde chambre 11 du vérin et le passage de fluide en provenance de la première chambre 10 du vérin vers le réservoir (phase d'ouverture de l'obturateur).

Dans l'électrovanne 22, la position de repos (qui est celle illustrée sur la figure 5) permet le passage de fluide de la première chambre 10 du vérin vers l'électrovanne 21. La position du tiroir 222 lorsque la bobine 212 est alimentée électriquement (correspondant à un déplacement vers le bas dans la configuration illustrée sur la figure 5) bloque le passage de fluide de la première chambre du vérin vers l'électrovanne 21 et permet ainsi un blocage de la course d'ouverture de l'obturateur.

Dans l'électrovanne 21, la position de repos (qui est celle illustrée sur la figure 5) permet le passage de fluide au travers du second régulateur unidirectionnel de débit 25, imposant une vitesse d'ouverture rapide. Lorsque la bobine 211 de l'électrovanne 22 est alimentée électriquement, la position du tiroir 221 (correspondant à un déplacement vers le bas par rapport à la configuration illustrée à la figure 5) envoie le fluide vers le premier régulateur unidirectionnel de débit 24, imposant ainsi une vitesse d'ouverture lente de l'obturateur.

Lorsque la bobine 201 est alimentée électriquement, la position du tiroir (correspondant à un déplacement vers le bas par rapport à la configuration illustrée à la figure 5) permet le passage de fluide en provenance du réservoir vers la première chambre 10 du vérin et le passage de fluide en provenance de la seconde chambre 11 du vérin vers le réservoir (phase de fermeture de l'obturateur).

Dans l'électrovanne 22, la position de repos (qui est celle illustrée sur la figure 5) permet le passage de fluide de l'électrovanne 21 vers la première chambre 10 du vérin. La position du tiroir 222 lorsque la bobine 212 est alimentée électriquement (correspondant à un déplacement vers le bas dans la configuration illustrée sur la figure 5) bloque le passage de fluide de l'électrovanne 21 vers la première chambre 10 du vérin et permet ainsi un blocage de la course de fermeture de l'obturateur.

Dans l'électrovanne 21, la position de repos (qui est celle illustrée sur la figure 5) permet le passage de fluide au travers du redresseur de débit 26 et du second régulateur unidirectionnel de débit 25, imposant une vitesse de fermeture rapide. Lorsque la bobine 211 de l'électrovanne 21 est alimentée électriquement, la position du tiroir 221 (correspondant à un déplacement vers le bas par rapport à la configuration illustrée à la figure 5) permet le passage de fluide au travers du clapet anti-retour 240 agencé en parallèle du premier régulateur de débit 24. La fermeture de l'obturateur est alors instantanée.

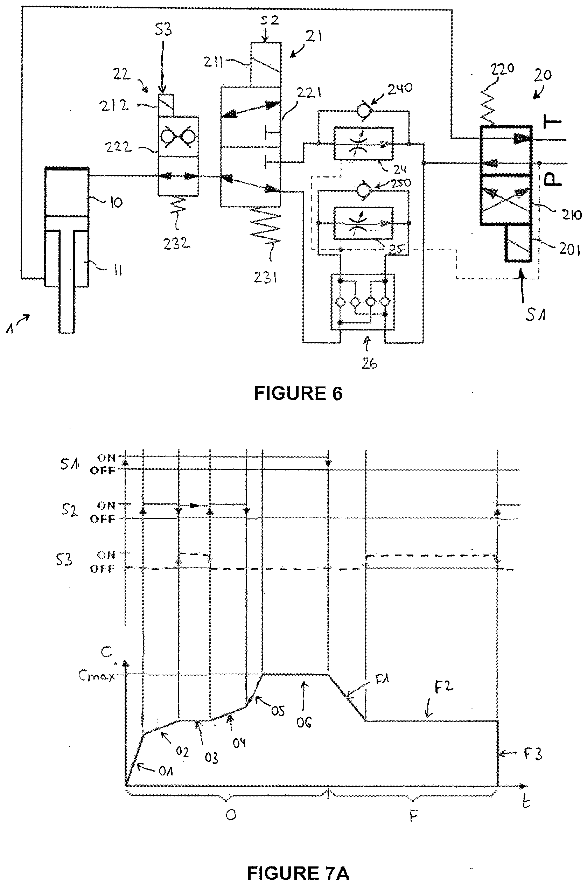

La figure 6 est un schéma hydraulique du mode de réalisation n°28, mettant en oeuvre trois électrovannes monostables 20, 21, 22.

Ce mode de réalisation est à rapprocher de celui du mode de réalisation n°12 illustré sur la figure 5, la seule différence entre ces deux modes de réalisation étant que l'électrovanne principale 20 qui commande l'ouverture ou la fermeture de l'obturateur est monostable et non bistable. On ne décrira donc pas à nouveau les autres éléments du circuit hydraulique ni leur fonctionnement au cours d'une séquence d'ouverture-fermeture de l'obturateur.

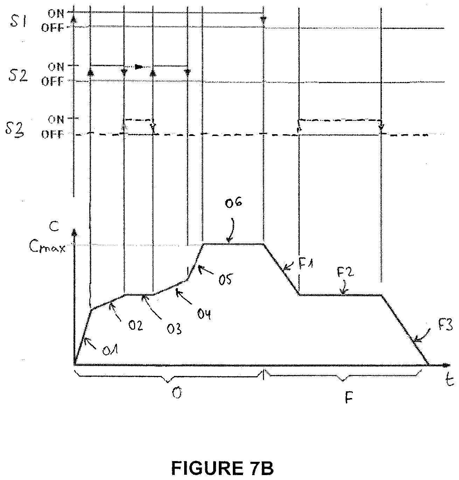

Les figures 7A et 7B sont des exemples de courbes de la course C de l'obturateur au cours d'un cycle d'ouverture-fermeture susceptibles d'être obtenues avec les modes de réalisation n^{os} 12 et 28.

Les signaux S1, S2, S3 de chacune des trois voies de l'unité de commande séquentielle reliées respectivement aux électrovannes 20, 21, 22 présentent soit une amplitude nulle (OFF), soit une amplitude d'une valeur déterminée (ON). L'état OFF correspond à une absence d'alimentation de la bobine considérée.

Dans une première étape O1 de la phase d'ouverture O, le signal S1 est à l'état ON tandis que les signaux S2 et S3 sont à l'état OFF. Le vérin entame sa course d'ouverture à la vitesse rapide.

Dans une deuxième étape O2 de la phase d'ouverture O, le signal S1 est toujours à l'état ON et le signal S2 passe à l'état ON (actionnement de l'électrovanne 21), le signal S3 restant à l'état OFF. La course du vérin ralentit à la vitesse lente.

Dans une troisième étape O3 de la phase d'ouverture O, le signal S1 est toujours à l'état ON et le signal S3 passe à l'état ON (activation de l'électrovanne 22), le signal S2 passant à l'état OFF (désactivation de l'électrovanne 21) ou non. La course du vérin est alors bloquée.

Dans une quatrième étape O4 de la phase d'ouverture O, le signal S1 est toujours à l'état ON et le signal S2 passe à l'état ON (activation de l'électrovanne 21), le signal S3 passant à l'état OFF (désactivation de l'électrovanne 22). La course du vérin reprend alors avec la vitesse lente.

Dans une cinquième étape O5 de la phase d'ouverture O, le signal S1 est toujours à l'état ON et le signal S2 passe à l'état OFF (désactivation de l'électrovanne 21), le signal S3 restant à l'état OFF. La course du vérin se poursuit alors avec la vitesse rapide.

Dans une sixième étape O6 de la phase d'ouverture O, le signal S1 est toujours à l'état ON. La course maximale d'ouverture Cₘₐₓ de l'obturateur étant atteinte, celle-ci est bloquée.

Pour engager la phase de fermeture F, le signal S1 passe à l'état OFF. Les signaux S2 et S3 restant à l'état OFF, le fluide passe au travers du second régulateur unidirectionnel de débit 25 par l'intermédiaire du redresseur de débit 26, imposant ainsi une vitesse rapide de fermeture pendant l'étape F1.

Dans une deuxième étape F2 de fermeture, le signal S3 passe à l'état ON (activation de l'électrovanne 22) et entraîne un blocage de l'obturateur.

Dans une troisième étape F3 de fermeture, le signal S3 passe à l'état OFF (désactivation de l'électrovanne 22) et le signal S2 passe à l'état ON (activation de l'électrovanne 21), entraînant ainsi une fermeture instantanée (le fluide passant au travers du clapet anti-retour 240).

La figure 7B présente une courbe similaire à celle de la figure 7A, différant seulement par la troisième étape de fermeture F3 qui est réalisée à vitesse rapide et non de manière instantanée. Cette étape est mise en oeuvre en maintenant l'électrovanne 21 au repos (signal S2 restant à OFF), de sorte à faire passer le fluide au travers du second régulateur unidirectionnel de débit 25 par l'intermédiaire du redresseur de débit 26.

Il va de soi que les courbes des figures 7A et 7B ne sont que des exemples non limitatifs parmi la pluralité de séquences que les modes de réalisation n^{os} 12 et 28 permettent de générer.

Si l'on ne souhaite pas pouvoir bloquer la course d'ouverture et de fermeture de l'obturateur mais seulement influer sur la vitesse d'ouverture et de fermeture, on pourra retirer l'électrovanne 22 du circuit hydraulique représenté sur les figures 5 et 6.

De même, si l'on ne souhaite pas faire varier la vitesse d'ouverture ou de fermeture mais avoir la possibilité de bloquer la course d'ouverture ou de fermeture, on pourra retirer l'électrovanne 21 et l'un des régulateurs de débit du circuit hydraulique représenté sur les figures 5 et 6.

On s'intéresse maintenant au cas d'un vérin électrique, qui n'est pas couvert par les revendications.

Contrairement au vérin hydraulique et au vérin pneumatique, le vérin électrique n'est pas alimenté par un fluide mais par un courant électrique qui alimente un moteur couplé à la tige du vérin.

A cet effet, le dispositif de commande du vérin comprend une carte électronique comprenant au moins deux composants électroniques parmi :
- un composant de réglage de la vitesse du vérin à une première vitesse,
- un composant de réglage de la vitesse du vérin à une deuxième vitesse supérieure à la première,
- un composant de blocage de la course du vérin.

Les composants de la carte électronique sont préalablement programmés selon des techniques connues en elle-même.

L'unité de commande séquentielle est identique à celle décrite pour les modes de réalisation relatifs au vérin hydraulique et au vérin pneumatique ; elle ne sera donc pas décrite à nouveau de manière détaillée.

L'unité de commande comprend au moins deux voies de commande, reliées électriquement chacune à l'un des composants de la carte électronique.

Ainsi, l'envoi d'un signal de commande par une première voie de commande à l'un des composants (par exemple, un composant de réglage de la vitesse du vérin) déclenche le fonctionnement du moteur du vérin de manière à obtenir la vitesse de coulissement souhaitée.

Un signal de commande envoyée par une deuxième voie de commande à l'autre composant (par exemple, le composant de blocage de la course du vérin) a pour effet de stopper le moteur pour immobiliser le vérin.

On peut ainsi obtenir des courbes de la course du vérin au cours d'une séquence d'ouverture-fermeture de l'obturateur similaires à celles des figures 4, 7A et 7B.

Enfin, il va de soi que les exemples que l'on vient de donner ne sont que des illustrations particulières en aucun cas limitatives quant aux domaines d'application de l'invention.

### REFERENCES

EP 2 679 374
EP 2 604 408

## Revendications

1. Système de commande d'un obturateur agencé en coulissement dans une buse d'injection de matière plastique, comprenant :
- un vérin (1) hydraulique ou pneumatique couplé audit obturateur pour l'entraîner en coulissement entre une position d'obturation de la buse et une position d'ouverture maximale de la buse,
- un dispositif (2) de distribution de fluide au vérin (1), comprenant :
• une première voie en liaison fluidique avec une première chambre (10) du vérin,
• une deuxième voie en liaison fluidique avec une seconde chambre (11) du vérin,
• une troisième voie d'alimentation en fluide à partir d'un réservoir,
• une électrovanne principale (20) agencée pour établir sélectivement une liaison fluidique entre la troisième voie et la première ou la deuxième voie,
• un premier régulateur unidirectionnel (24) du débit de fluide agencé dans la liaison fluidique entre la première voie et la première chambre (10) du vérin, ledit premier régulateur (24) étant réglé à un premier débit constant, et
a) un second régulateur unidirectionnel (25) du débit de fluide agencé dans la liaison fluidique entre la première voie et la première chambre (10) du vérin en série ou en parallèle du premier régulateur (24), ledit second régulateur (25) étant réglé à un second débit constant supérieur au premier débit, et
une deuxième électrovanne (21) agencée de sorte à sélectivement établir une liaison fluidique entre la première chambre (10) du vérin et le premier ou le second régulateur unidirectionnel de débit (24, 25) lors d'une phase d'ouverture de l'obturateur, et/ou
b) une troisième électrovanne (22) agencée de sorte à sélectivement bloquer la circulation de fluide entre la première voie et la première chambre du vérin,
• au moins deux organes électriques de commande (201, 202, 211, 212) adaptés pour déplacer au moins un organe mobile (210, 221, 222) d'une électrovanne (20, 21, 22) respective de sorte à sélectivement établir au moins deux configurations différentes d'un circuit de fluide au sein du dispositif de distribution (2), lesdites configurations étant choisies de telle sorte qu'au cours d'un cycle d'ouverture de la buse, le fluide passe successivement au travers de chacun desdits au moins deux éléments,
- une unité de commande séquentielle (3) comprenant au moins deux voies de commande (30, 31, 32) chacune reliée électriquement à un organe électrique de commande (201, 202, 211, 212) respectif du dispositif de distribution (2), ladite unité de contrôle (3) étant configurée pour envoyer sélectivement un signal électrique de commande par l'une et/ou l'autre desdites voies de commande (30, 31, 32) de telle sorte que :
• sous l'effet d'un premier signal envoyé par une première voie de commande, le dispositif de distribution adopte une première configuration,
• sous l'effet d'un second signal envoyé par une seconde voie de commande, le dispositif de distribution adopte une seconde configuration différente de la première.

2. Système selon la revendication 1, comprenant en outre au moins un redresseur de débit (26) couplé à au moins un régulateur unidirectionnel de débit (25).

3. Système selon l'une des revendications 1 ou 2, comprenant en outre un clapet anti-retour (240, 250) agencé en parallèle d'au moins un régulateur unidirectionnel de débit (24, 25).

4. Système selon l'une des revendications 1 à 3, dans lequel le débit du premier (24) et/ou le second régulateur (25) est ajustable dans une gamme de débit déterminée entre deux cycles d'injection de matière plastique.

5. Système selon l'une des revendications 1 à 4, dans lequel le vérin ou l'obturateur est pourvu d'un capteur de position et l'unité de commande séquentielle est configurée pour contrôler l'émission des signaux de commande en fonction des mesures fournies par ledit capteur de position.

6. Système selon la revendication 5, dans lequel l'unité de commande séquentielle est configurée pour prendre en outre en compte au moins l'une des données suivantes : un temps du procédé d'injection, une position d'un capteur, une pression ou une température dans l'outillage d'injection, un signal de la presse à injecter.

7. Système selon l'une des revendications 1 à 6, dans lequel l'unité de commande séquentielle (3) est configurée pour envoyer un signal électrique de commande sous la forme d'un courant continu.

8. Système selon l'une des revendications 1 à 7, dans lequel l'unité de commande séquentielle (3) est configurée pour envoyer un signal électrique de commande sous la forme d'un courant alternatif.

## Patentansprüche

1. Steuersystem einer Verschlussvorrichtung, die gleitend in einer Einspritzdüse für Plastikmaterial angeordnet ist, umfassend:
- einen hydraulischen oder pneumatischen Zylinder (1), der an der genannten Verschlussvorrichtung gekoppelt ist, um sie gleitend zwischen einer Verschlussposition der Düse und einer maximalen Öffnungsposition der Düse anzutreiben;
- eine Verteilervorrichtung (2) der Flüssigkeit an den Zylinder (1), umfassend:
* einen ersten Weg in fluidischer Verbindung mit einer ersten Kammer (10) des Zylinders;
* einen zweiten Weg in fluidischer Verbindung mit einer zweiten Kammer (11) des Zylinders;
* einen dritten Versorgungsweg mit Flüssigkeit ausgehend von einem Tank;
* ein Haupt-Magnetventil (20), das angeordnet ist, um selektiv eine fluidische Verbindung zwischen dem dritten Weg und dem ersten oder dem zweiten Weg aufzubauen;
* einen ersten einseitig gerichteten Regler (24) des Flüssigkeitsdurchsatzes, der in der fluidischen Verbindung zwischen dem ersten Weg und der ersten Kammer (10) des Zylinders angeordnet ist, wobei der erste Regler (24) auf einen ersten, konstanten Durchsatz eingestellt ist, und
a) ein zweiter, einseitig gerichteter Regler (25) des Flüssigkeitsdurchsatzes in der fluidischen Verbindung zwischen dem ersten Weg und der ersten Kammer (10) des Zylinders in Serie oder parallel zu dem ersten Regler (24) angeordnet ist, wobei der genannte zweite Regler (259 auf einen zweiten, konstanten Durchsatz eingestellt ist, der größer ist als der erste Durchsatz und
ein zweites Magnetventil (21) derart angeordnet ist, dass bei einer Öffnungsphase der Verschlusseinrichtung selektiv eine fluidische Verbindung zwischen der ersten Kammer (10) des Zylinders und dem ersten oder dem zweiten, einseitig gerichteten Durchsatz (24, 25) aufgebaut ist, und alternativ oder zusätzlich zu a)
b) ein drittes Magnetventil (22) derart angeordnet ist, dass die Zirkulation der Flüssigkeit zwischen dem ersten Weg und der ersten Kammer des Zylinders blockiert ist,
* wenigstens zwei elektrische Steuerorgane (201, 202, 211, 212), die geeignet sind, um wenigstens ein mobiles Organ (201, 221, 222) eines jeweiligen Magnetventils (20, 21, 22) derart zu verschieben, dass selektiv wenigstens zwei unterschiedliche Ausgestaltungen eines Flüssigkeitskreislaufs innerhalb der Verteilervorrichtung (2) aufgebaut sind, wobei die genannten Ausgestaltungen derart ausgewählt sind, dass im Verlauf eines Öffnungszyklus der Düse die Flüssigkeit sukzessive durch jedes der genannten wenigstens zwei Elemente hindurchtritt;
- eine sequenzielle Steuereinheit (3), umfassend wenigstens zwei Steuerwege (30, 31, 32), von denen jeder elektrisch an einem jeweiligen elektrischen Steuerorgan (201, 202, 211, 212) der Verteilervorrichtung (2) verbunden ist, wobei die genannte Kontrolleinheit (3) ausgestaltet ist, um selektiv ein elektrisches Steuerorgan durch den einen und / oder den anderen der genannten Steuerwege (30, 31, 32) derart zu senden, dass:
* unter der Wirkung eines ersten, von einem ersten Steuerweg gesendeten Signals die Verteilervorrichtung eine erste Ausgestaltung übernimmt;
* unter der Wirkung eines zweiten, von einem zweiten Steuerweg gesendeten Signals die Verteilervorrichtung eine zweite, von der ersten unterschiedliche Ausgestaltung übernimmt.

2. System gemäß Anspruch 1, umfassend darüber hinaus wenigstens einen Durchsatz-Gleichrichter (26), der an wenigstens einen einseitig gerichteten Durchsatzregler (25) gekoppelt ist.

3. System gemäß einem der Ansprüche 1 oder 2, das darüber hinaus ein Rückschlagventil (240, 250) umfasst, das parallel zu wenigstens einem einseitig gerichteten Durchsatzregler (24, 25) angeordnet ist.

4. System gemäß einem der Ansprüche 1 bis 3, bei dem der Durchsatz des ersten (24) und / oder des zweiten Reglers (25) in einem Durchsatzbereich anpassbar ist, der zwischen zwei Einspritzzyklen von Plastikmaterial bestimmt ist.

5. System gemäß irgendeinem der Ansprüche 1 bis 4, bei dem der Zylinder oder die Verschlussvorrichtung mit einem Positionssensor versehen ist und die sequenzielle Steuereinheit ausgestaltet ist, um die Ausgabe der Steuersignale in Abhängigkeit von den Messungen zu kontrollieren, die von dem genannten Positionssensor geliefert sind.

6. System gemäß Anspruch 5, bei dem die sequenzielle Steuereinheit ausgestaltet ist, um darüber hinaus wenigstens eines der folgenden Datenelemente zu berücksichtigen: eine Zeit des Einspritzverfahrens, eine Position eines Sensors, einen Druck oder eine Temperatur in dem Einspritzwerkzeug, ein einzuspritzendes Signal der Presse.

7. System gemäß einem der Ansprüche 1 bis 6, bei dem die sequenzielle Steuereinheit (3) ausgestaltet ist, um ein elektrisches Steuersignal in Form eines Gleichstroms zu senden.

8. System gemäß einem der Ansprüche 1 bis 7, bei dem die sequenzielle Steuereinheit (3) ausgestaltet ist, um ein elektrisches Steuersignal in Form eines Wechselstroms zu senden.

## Claims

1. System for controlling a shutter arranged to slide in a plastic material injection nozzle, comprising:
- a hydraulic or pneumatic actuating cylinder (1) coupled to said shutter to make it slide between a shutting off position of the nozzle and a maximum opening position of the nozzle,
- a device (2) for distributing fluid to the actuating cylinder (1), comprising:
• a first path in fluidic connection with a first chamber (10) of the actuating cylinder,
• a second path in fluidic connection with a second chamber (11) of the actuating cylinder,
• a third path for supplying fluid from a reservoir,
• a main solenoid valve (20) arranged to establish selectively a fluidic connection between the third path and the first or the second path,
• a first unidirectional regulator (24) of the flow of fluid arranged in the fluidic connection between the first path and the first chamber (10) of the actuating cylinder, said first regulator (24) being regulated to a first constant flow, and
a) a second unidirectional regulator (25) of the flow of fluid arranged in the fluidic connection between the first path and the first chamber (10) of the actuating cylinder in series or in parallel with the first regulator (24), said second regulator (25) being regulated to a second constant flow greater than the first flow and
a second solenoid valve (21) arranged to establish selectively a fluidic connection between the first chamber (10) of the actuating cylinder and the first or second unidirectional regulator (24, 25) of the flow during an opening phase of the shutter,
and, alternatively or in addition to a)
b) a third solenoid valve (22) arranged so as to selectively block the circulation of fluid between the first path and the first chamber of the actuating cylinder,
• at least two electrical control members (201, 202, 211, 212) adapted to displace at least one moveable member (210, 221, 222) of a respective solenoid valve (20, 21, 22) so as to selectively establish at least two different configurations of the fluid circuit within the distribution device (2), said configurations being selected in such a way that in the course of an opening cycle, the fluid passes successively through each of said at least two elements,
- a sequential control unit (3) comprising at least two control paths (30, 31, 32) each electrically connected to a respective electric member (201, 202, 211, 212) for controlling the distribution device (2), said control unit (3) being configured to send selectively an electrical control signal via one and/or the other of said control paths (30, 31, 32) such that:
• under the effect of a first signal sent via a first control path, the distribution device adopts a first configuration,
• under the effect of a second signal sent via a second control path, the distribution device adopts a second configuration different from the first.

2. System according to claim 1, further comprising at least one flow rectifier (26) coupled to at least one unidirectional flow regulator (25).

3. System according to one of claims 1 or 2, further comprising a non-return valve (240, 250) arranged in parallel with at least one unidirectional flow regulator (24, 25).

4. System according to one of claims 1 to 3, wherein the flow of the first (24) and/or the second regulator (25) is adjustable within a determined flow range between two plastic material injection cycles.

5. System according to one of claims 1 to 4, wherein the actuating cylinder or the shutter is provided with a position sensor and the sequential control unit is configured to control the emission of the control signals as a function of the measurements supplied by said position sensor.

6. System according to claim 5, wherein the sequential control unit is configured to further take into account at least one of the following data: a time of the injection process, a position of a sensor, a pressure or a temperature in the injection tooling, a signal from the press to inject.

7. System according to one of claims 1 to 6, wherein the sequential control unit (3) is configured to send an electrical control signal in the form of a direct current.

8. System according to one of claims 1 to 7, wherein the sequential control unit (3) is configured to send an electrical control signal in the form of an alternating current.
